# EUROPEAN PATENT APPLICATION

(11) **EP 3 936 719 A1**
(43) Date of publication of application: **12.01.2022**
(21) Application number: 20184904.9
(22) Date of filing: 09.07.2020
(51) Int. Cl.: F03D 80/50

(54) **PORTABLE SERVICE DEVICE**

(71) Applicant: Siemens Gamesa Renewable Energy A/S, 7330 Brande (DK)
(72) Inventor: Elberling, Jeffrey, Boulder, CO 80021 (US); Nielsen, Lars Holm, 8766 Noerre Snede (DK)
(74) Representative: Aspacher, Karl-Georg

(57) **Abstract**

The invention describes a portable service device (1) for machining a surface (30S) of a component (30) of a wind turbine (3), which portable service device (1) comprises a machining component (10) configured to machine the surface (30S); a 3-axis gantry system (11) with a movable carrier (11Z_C) to which the machining component (10) is attached; an arrangement of at least three legs (12) attached to the gantry system (11), wherein each leg (12) terminates in a suction cup (12S); and a vacuum assembly (14P, 14A) configured to achieve a partial vacuum between a suction cup (12S) and a surface (30S). The invention further describes a portable service device arrangement (2), and a method of machining an outer surface (30S) of a wind turbine rotor blade (30).

## Description

Wind turbine blades may require external repairs due to a variety of damage modes - caused by normal wear and tear, impacts, material defects, or force majeure events like lightning strikes. These repairs are most commonly performed by technicians accessing the blade via ropes, a so called cherry-picker, or a rotor blade climbing platform. The duration and complexity of each repair procedure is dictated by the damage severity and its location on the blade.

Usually all damaged material must be removed during the repair process. Damage may be present in the topcoat paint of the wind turbine blade, filler material (i.e. a medium layer), and/or the underlying fiberglass structure. A technician usually uses a device such as an orbital sander/grinder to remove these materials.

Removal of these materials by grinding is among the most time-consuming and labour-intensive steps in the repair process. Besides, quality control of this removal process is largely influenced by the technician's skill level and experience.

The object of the invention is to improve such a repair procedure.

This object is achieved by the portable service device of claim 1; by the portable service device arrangement of claim 9, and by the method of claim 12 of machining an outer surface of a wind turbine rotor blade.

According to the invention, the portable service device is constructed to machine a surface of a wind turbine component such as a rotor blade, and comprises a machining tool that can be used to machine a surface area; a three-axis gantry system comprising a movable carrier to which the machining component is attached; an arrangement of at least three legs attached to the gantry system, wherein each leg terminates in a suction cup; and a vacuum assembly configured to extract air from between a suction cup and the surface of the wind turbine component.

The inventive portable service device may be regarded as a robot, i.e. a machine that is constructed to carry out the task of machining a difficult-to-reach surface of a wind turbine component such as a rotor blade. The inventive portable service device has the ability to move, and can be programmed.

An advantage of the inventive portable service device is that it can remove damaged material faster and more accurately than an average technician, so that fewer man-hours are required to perform a grinding task. Further advantages of the inventive portable service device are therefore cost savings and an improvement in safety.

According to the invention, the portable service device arrangement comprises such a portable service device; a rigging arrangement for securing the portable service device to a rotor blade; and a winch assembly for adjusting a distance between the portable service device and the rigging arrangement.

According to the invention, the method of machining an outer surface of a wind turbine rotor blade comprises at least the steps of mounting a rigging arrangement to the upper end of the rotor blade; attaching an embodiment of the invective portable service device to the rigging arrangement; actuating the winch assembly to bring the portable service device to a desired position along the rotor blade; actuating the vacuum assembly to create a vacuum between each suction cup and the rotor blade surface; and actuating the machining component to remove material from the surface to a desired depth.

Particularly advantageous embodiments and features of the invention are given by the dependent claims, as revealed in the following description. Features of different claim categories may be combined as appropriate to give further embodiments not described herein.

In the following, without restricting the invention any way, it may be assumed that surface area being treated by the portable service device is the outer surface of a wind turbine rotor blade.

The portable service device of the present invention utilizes a 3-axis gantry system and preferably comprises a router arrangement for displacing the machining component along one or more axes of the gantry system.

In a preferred embodiment of the invention, the machining component is a disc grinder. The disc grinder is preferably equipped with a diamond wheel to achieve longer grind times compared to standard sanding pads due to higher material strength and longer life.

In a preferred embodiment of the invention, the legs are retractable and can be moved upwards to avoid contact with the rotor blade surface during a positioning manoeuvre, and can be lowered to make contact with the rotor blade surface when required.

Preferably, the rotor blade to be repaired is positioned vertically (blade tip pointed down) and the entire system is mounted to the rotor blade via a rigging strap anchored around the circumference of the rotor blade, above the area to be repaired. The rigging arrangement can be put into place by a technician from the safety of an aerial work platform (also known as a "cherry-picker"). The rigging preferably includes a ratchet strap that can be tightened about the rotor blade, and various loops or anchor points for connection to hoist lines of the winch assemblies.

Alternatively or in addition, a technician can enter the hub and access the exterior through a hatch or door, and can put the rigging into place about the root end of the rotor blade. In this approach, a hoist line, cable, paracord or rope may be lowered from the root end of the rotor blade for connection to hoist lines of the winch assemblies.

In a preferred embodiment of the invention, the portable service device uses two (or more) onboard motorized winches to raise the device into position to execute the grind. While the portable service device is being raised or lowered into place, the legs are preferably retracted. To allow the portable service device to smoothly move along the rotor blade surface, it preferably comprises an arrangement of castors ("castor wheels").

Once at its desired position, a software program or a controller controls actuators such as stepper motors to move the legs and the suction cups towards the blade surface. Each leg can be equipped with a pressure sensor to determine when its outer end (suction cup) has made contact with the rotor blade surface. When the outer ends of the legs are in place, the controller actuates the vacuum assembly to create and maintain a partial vacuum between each suction cup and the rotor blade surface.

In a preferred embodiment of the invention, a suction cup is connected directly to a solenoid valve in order to maintain the vacuum once the compressor is stopped. Each solenoid valve is connected directly to a vacuum pump. In a preferred embodiment of the invention, a combination vacuum pump and air compressor is deployed to create and maintain the desired partial vacuum.

Once vacuum pressure is achieved on all four feet, the software program can proceed to activate the router. Depending on the gantry construction, this step can may include controlling various stepper motors to move the grinding head carrier to the desired grinding position. Once the grinding head is in place above the damaged area, the controller can lower the grinding head carrier and then actuate the grinding head to begin grinding.

In a preferred embodiment of the invention, the portable service device comprises an onboard camera arrangement that is configured to capture images of the surface. Preferably, the onboard camera displays a live feed to the technician, who can manually control, interrupt, or stop the program - i.e. the grinding procedure - during operation. In a preferred embodiment of the invention, the portable service device comprises an onboard distance sensor that measures the position of the grinding head relative to the blade surface. On the basis of data from the distance sensor, for example, the controller can control the grinder head in order to grind to a desired depth and/or to achieve repeatable results.

Upon completion of the grinding process, the suction cups will be "deactivated". For example, in an embodiment that deploys a combination vacuum pump and air compressor, the flow of compressed air to the vacuum pump can be interrupted with the result that the partial vacuum between each suction cup and rotor blade cannot be maintained, and the suction cups will detach or release.

Once the grinding tasks have been carried out, the portable service device can be removed from the blade. Depending on the depth of the grinding process, fiberglass and/or filler may not need to be inserted. Otherwise, the remaining steps of the blade repair process - e.g. installing new fiberglass, filler, and paint - can be performed by a technician.

Of course, an embodiment of the inventive portable service device can be constructed to also perform such tasks, for example by equipping it with appropriate remote-controllable or autonomous tools/components such as a component that can apply fiberglass and/or a component to apply a filler and/or a component to apply paint.

The advantages of the inventive portable service device are: cost savings, improved repair quality, and improved safety/ergonomics for technicians. The device is expected to be able to grind damaged material faster than an average technician, so that fewer man-hours are required to perform a grinding task.

Because the inventive portable service device uses software to control its movement, the grinding process is expected to become standardized in the context of repeatability (i.e. without the inconsistencies arising from human error), thereby ensuring quality repairs according to repair requirements.

Safety and ergonomics are improved via the device's autonomous operation. Because the device can be mounted on the blade and operate without human assistance, technicians are physically removed from the risks typically associated with the grinding task. In other words, because the device performs the grinding steps without interaction by a technician, the technician is removed from an otherwise hazardous task in which he would be required to operate rotating equipment at height while being exposed to airborne particulates, etc.

These advantages are achieved by the software controlled inventive portable service device, which allows improved grind times. Moreover, the entire repair process is expected to be shorter due to technicians being made available to perform other steps of the repair (e.g. cutting fiberglass, mixing chemicals, etc.) while the inventive portable service device is taking care of the preparatory grinding step.

Repair quality is also driven by the software control, and is further improved by positioning feedback from the device's motors and the on-board distance sensor. These measurements can be used to quantify the area treated by the disc grinder and can be extracted for traceability after the repair is complete.

In consequence substantial cost savings per blade repair can be achieved when using this device compared to current repair methods, based on reduced labour time and reduced parts/consumables used.

Measurement data that optionally can be collected by the device can be used in its post-repair blade databases, etc. to standardize the grinding process and expand predictive modelling of damage severities and/or repair durations.

In an exemplary embodiment, the portable service device arrangement at least also comprises a micro-controller to control actuators and/or for processing data from sensors; a router to exchange data with a remote control centre; a control centre with a user interface via which a technician can input parameters such as grinding dimensions, speed of the grinder, grinding force, etc.; a laser sensor to map out the profile of the grinding surface and/or to verify the dimension of the surface after the grinding; a camera to capture an image of the damaged area and/or the area after grinding; legs with suction cups; the suction cups may be in fluid communication with an air compressor; a vacuum sensor for each suction cup; and a 3D gantry system with stepper motors for positioning the grinder.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a side view of an embodiment of the inventive portable service device;
Figure 2 shows a plan view of the device of Figure 1;
Figure 3 shows an exemplary leg assembly for use in an embodiment of the inventive portable service device;
Figure 4 shows a preparatory stage in a repair procedure;
Figure 5 shows an embodiment of the inventive portable service device being moved along a wind turbine rotor blade;
Figure 6 shows an intermediate stage in a repair procedure;
Figure 7 shows an embodiment of the inventive portable service device in operation to remove damaged material from the surface of a wind turbine rotor blade.

In the diagrams, like numbers refer to like objects throughout. Objects in the diagrams are not necessarily drawn to scale.

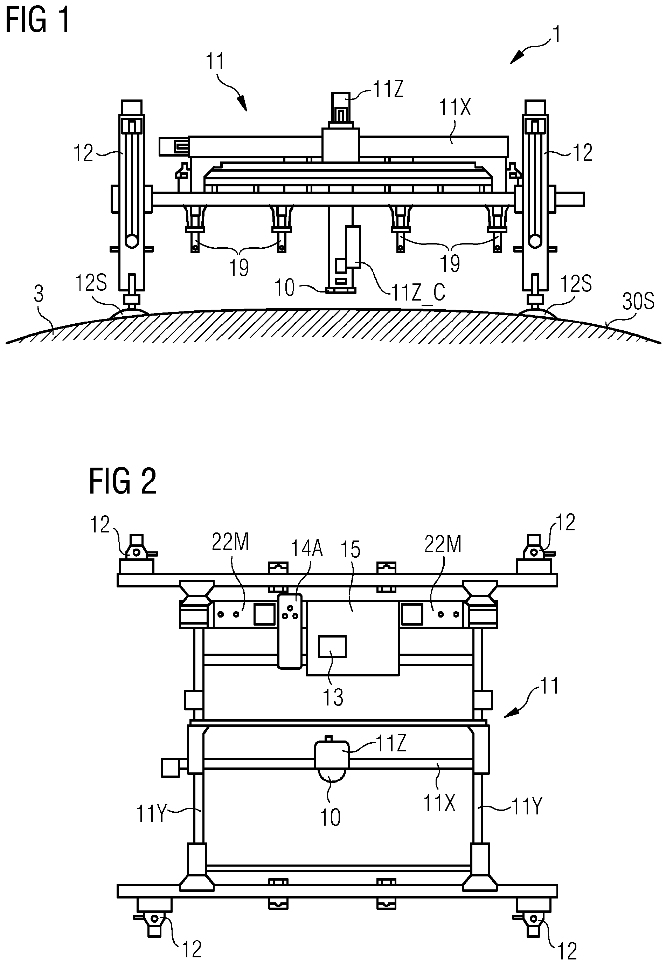

Figure 1 shows a side view of an embodiment of the inventive portable service device 1 in place on a surface 30S of a wind turbine rotor blade 3. The diagram shows various framework elements of the three-axis gantry 11, and a disc grinder 10 held by a carrier 11Z C which can be moved vertically along a Z-axis strut 11Z, which in turn can be moved vertically relative to an X-axis strut 11X. The legs 12 can also be moved vertically - i.e. retracted or extended - relative to a horizontal element of the gantry 11. In this view, two of the legs 12 can be seen in their extended positions. A vacuum assembly has been actuated to create a partial vacuum between the suction cups 12S and the surface 30S. A number of castor wheels 19 can also be seen; these are not in contact with the surface 30S since the legs 12 have been extended.

Figure 2 shows the portable service device 1 from above. The horizontal and vertical structural elements of the gantry 11 can be seen clearly. In this exemplary embodiment, the Z-axis strut 11Z can be moved sideways along the X-axis strut 11X, which in turn can be moved up and down (in the plane of the drawing) along the two parallel Y-axis struts 11Y. The disc grinder 10 can be moved up and down (perpendicular to the plane of the drawing) by actuating the movable carrier 11Z_C shown in Figure 1.

The diagram also shows a communications module 15 which can receive commands from a remote control station 20, and which can distribute the commands to a router and various actuators. The router can for example convert a 3D target coordinate into commands for various actuators in order to move the disc grinder into position above an area to be machined, and to lower the disc grinder head onto the surface. An arrangement of stepper motors 13M is provided to effect the desired displacements.

The diagram also indicates suitable positions for a distance sensor 17 and a camera 18.

In this exemplary embodiment, the vacuum assembly is realised as a continuous-duty combination vacuum pump and air compressor. The diagram shows an air compressor 14A mounted on the gantry 11. An arrangement of hoses leads from the air compressor 14A to a vacuum pump 14P on each leg 12.

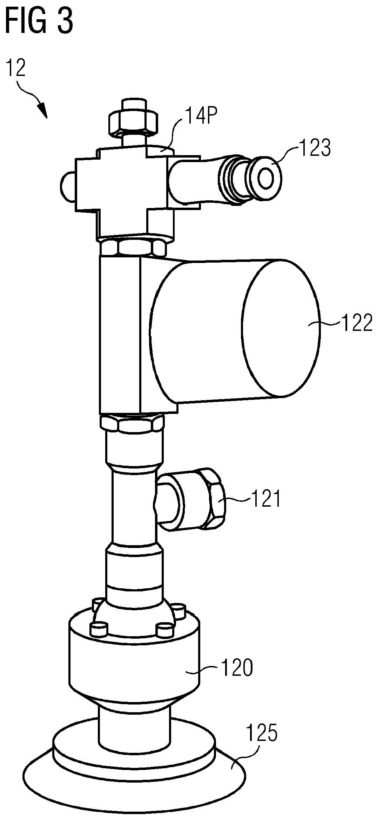

Figure 3 shows a leg 12 of the inventive portable service device. The leg 12 has a vertical hollow tubular construction. Here, a solenoid valve 122 is a central element of the leg assembly: a pneumatic ball joint 120 is mounted by means of a threaded adapter 121 to the solenoid valve 122, which in turn is connected by means of another threaded adapter to a vacuum pump 14P.

A suction cup 12S is mounted to the pneumatic ball joint to form the "foot" of the leg. The ball joint 120 allows the suction cup 12S to find a suitable orientation when the surface topology departs from the horizontal. The vacuum pump 14P is realized to extract air from the suction cup 12S when in place on a smooth surface. A hose connector 123 connects the vacuum pump 14P to the air compressor 14A mounted on the gantry 11.

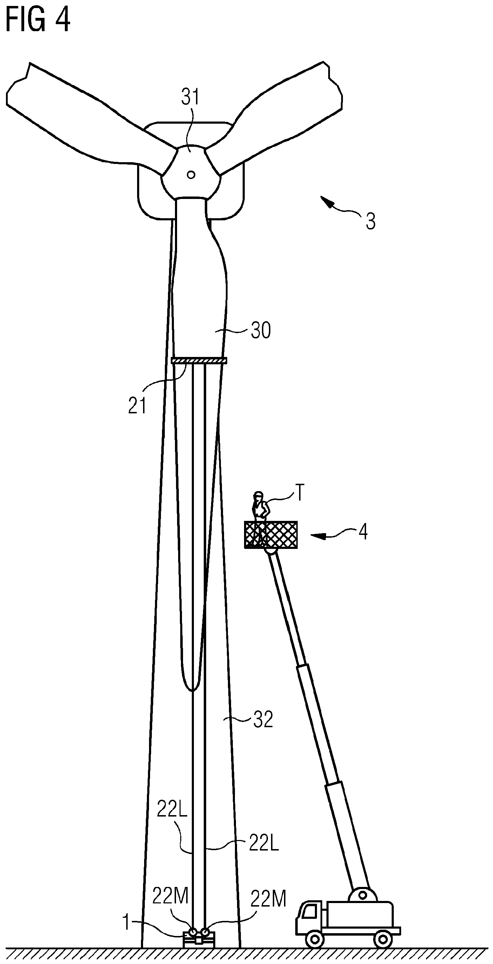

Figure 4 shows a preparatory stage in a repair procedure. A wind turbine 3 has been halted, so that a rotor blade 30 points vertically downward. A technician T supported by an aerial working platform 4 has attached rigging to the rotor blade 30 by placing a rigging strap 21 about the rotor blade 30 and lowering hoist lines 22L to the ground. The hoist lines 21 are wound onto winches 22 of a portable service device 1, shown here resting on the ground. As an alternative to using an aerial working platform 4, a technician could enter the hub 31 and abseil down to a suitable level along the rotor blade 30 in order to attach the rigging strap 21.

The winch motors 22M can then be actuated to raise the portable service device 1 to the rotor blade. At this stage, the legs are retracted. A power line (not shown) can be provided to supply the winch motors 22M, vacuum assembly, actuators and other elements of the portable service device 1 with power from an outlet in the base of the tower 32, from a photovoltaic module, from a diesel generator, etc.

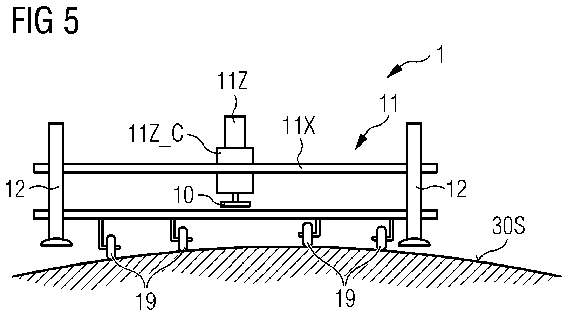

Figure 5 shows how the portable service device 1 can "roll" along the rotor blade surface 30S by means of the castors 19. This diagram shows the legs 12 in their retracted positions, and also shows the Z-axis strut in a raised positon to keep the disc grinder above the surface.

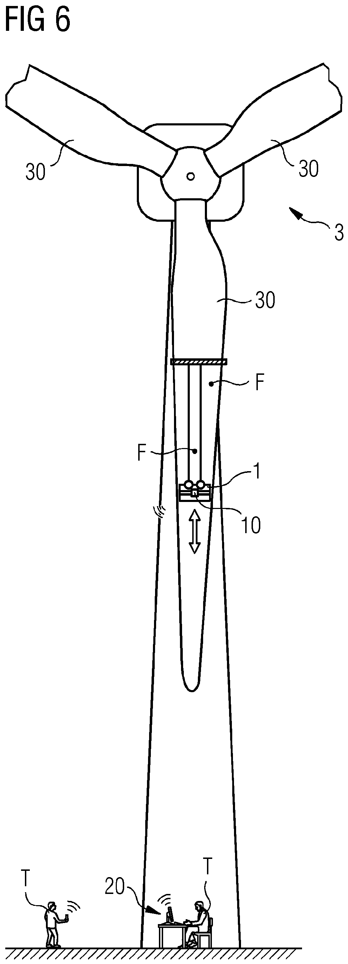

Figure 6 shows a stage during the repair procedure. A technician T can operate the portable service device 1 using a handheld remote control unit 20, or can operate a remote control station 20 installed in the base of the tower 32, for example (the options are both shown in the drawing but may be independent of each other). Control commands can be issued to move the portable service device 1 vertically and/or horizontally in order to position the disc grinder above a damaged area F (two exemplary areas are shown here) which is to be treated using the disc grinder.

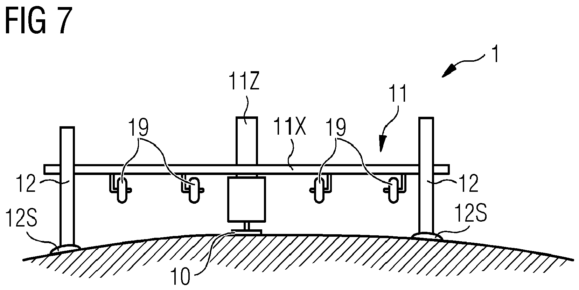

Figure 7 shows a stage in a repair procedure. The disc grinder has been brought into position above a damaged area F. The legs 12 are extended, and a partial vacuum is created between the suction cups 12S and the rotor blade surface 30S. The disc grinder is actuated to remove damaged material to a desired depth, in response to commands received from the remote control station.

Although the present invention has been disclosed in the form of preferred embodiments and variations thereon, it will be understood that numerous additional modifications and variations could be made thereto without departing from the scope of the invention.

## Claims

1. A portable service device (1) for machining a surface (30S) of a component (30) of a wind turbine (3), which portable service device (1) comprises
- a machining component (10) configured to machine the surface (30S);
- a 3-axis gantry system (11) with a movable carrier (11Z_C) to which the machining component (10) is attached;
- an arrangement of at least three legs (12) attached to the gantry system (11), wherein each leg (12) terminates in a suction cup (12S); and
- a vacuum assembly configured to extract air from between a suction cup (12S) and a surface (30S).

2. A portable service device according to claim 1, comprising a router arrangement (13, 13M) for displacing the machining component (10) along one or more axes (11X, 11Y, 11Z) of the gantry system (11).

3. A portable service device according to any of the preceding claims, wherein the machining component (10) comprises a disc grinder.

4. A portable service device according to any of the preceding claims, comprising a distance sensor (17) arranged to measure a distance to the surface (30S).

5. A portable service device according to any of the preceding claims, wherein the legs (12) are retractable.

6. A portable service device according to any of the preceding claims, comprising an arrangement of castors (19) to facilitate motion of the portable service device (1) along the surface (30S).

7. A portable service device according to any of the preceding claims, wherein the vacuum assembly is configured to release the suction cups (12S) from the surface (30S).

8. A portable service device according to any of the preceding claims, comprising a communications interface (15) configured to exchange data with a remote control station.

9. A portable service device arrangement (2) comprising
- a portable service device (1) according to any of claims 1 to 8;
- a rigging arrangement (21) for securing the portable service device (1) to a wind turbine rotor blade (30); and
- a winch assembly (22) to raise/lower the portable service device (1) relative to the rigging arrangement (21).

10. A portable service device arrangement according to claim 9, wherein the winch assembly (22) comprises a number of winch motors (22M) installed on the portable service device (1).

11. A portable service device arrangement according to claim 9 or claim 10, comprising a remote control station (20) configured to control any of: the machining component (10), a winch motor (22M), the vacuum assembly (14P, 14A), a stepper motor (13M) of the router arrangement, an actuator of a retractable leg (12).

12. A method of machining an outer surface (30S) of a wind turbine rotor blade (30), which method comprises at least the steps of
- providing a portable service device arrangement (2) according to any of claims 9 to 11;
- mounting the rigging arrangement (21) about the rotor blade (30);
- attaching the portable service device (1) to the rigging arrangement (21);
- actuating the winch assembly (22) to bring the portable service device (1) to a desired position;
- actuating the vacuum assembly (14P, 14A) to achieve a partial vacuum between each suction cup (12S) and the rotor blade surface (30S); and
- actuating the machining component (10) to perform a machining task.

13. A method according to claim 12, wherein the rigging arrangement (21) comprises a ratchet strap to extend about the rotor blade (30S).

14. A method according to any of claims 12 to 13, wherein the legs (12) of the portable service device (1) are retractable, and wherein the step of actuating the vacuum assembly (14P, 14A) is preceded by a step of extending the retractable legs (12) until the suction cups (12S) make contact with the surface (30S).

15. A computer program product comprising a computer program that is directly loadable into a memory of a control unit (20) of a portable service device arrangement (2) and which comprises program elements for performing method steps to control any of the machining component (10), a winch motor (22M), the vacuum assembly (14P, 14A), a stepper motor (13M), a retractable leg actuator of (12) when the computer program is executed by the control unit (20) of the portable service device arrangement (2).
